# EUROPEAN PATENT APPLICATION

(11) **EP 4 686 969 A1**
(43) Date of publication of application: **04.02.2026**
(21) Application number: 25193340.4
(22) Date of filing: 01.08.2025
(51) Int. Cl.: G02B 6/38, G02B 6/42

(54) **OPTICAL-FIBER ADAPTER**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

An optical-fiber adapter (100) includes an adapter body (1), a base component (2), and a conductive module (3).Two ends of the adapter body (1) have a first mating side (11) and a second mating side (12).Four side walls of the adapter body (1) define a receiving cavity (10), the first mating side (11) has a first insertion opening (111) in communication with the receiving cavity (10), and the second mating side (12) has a second insertion opening (121) in communication with the receiving cavity (10).A bottom portion of the adapter body (1) has an assembling groove (13) in communication with the receiving cavity (10).The base component (2) is retained in the receiving cavity (10).The conductive module (3) includes conductive terminals (32).One of two ends of each conductive terminal (32) is in the receiving cavity (10) and adjacent to the assembling groove (13), and the other end of each conductive terminal (32) extends out of the assembling groove (13) from the receiving cavity (10).

## Description

### FIELD OF THE INVENTION

The instant disclosure relates to an adapter, and more particular to an optical-fiber adapter.

### BACKGROUND

The optical-fiber cable serves as an tool for optical transmission. An optical-fiber connector assembly includes a female adapter and two male optical-fiber connectors respectively mated with two ends of the female adapter. Therefore, engagement and data transmission between the adapter and the connectors can be achieved. A lucent connector (LC) type optical-fiber adapter known to the inventor is utilized as an optical transmission connector for LC-type optical-fiber cables to transmit optical signals. However, the LC-type adapter fails to provide additional functions.

### SUMMARY OF THE INVENTION

In view of these, one or some embodiments of the instant disclosure provide an optical-fiber adapter. The optical-fiber adapter comprises an adapter body, a base component, and a conductive module. Two ends of the adapter body have a first mating side and a second mating side. Four side walls of the adapter body define a receiving cavity, the first mating side of the adapter body has a first insertion opening in communication with the receiving cavity, and the second mating side of the adapter body has a second insertion opening in communication with the receiving cavity. The four side walls of the adapter body are a first side wall, a second side wall, a blocking wall, and a combining base wall, respectively. The first side wall and the second side wall of the adapter body are respectively connected to two sides of the combining base wall and two sides of the blocking wall. The adapter body has an assembling groove at the combining base wall and in communication with the receiving cavity. The base component is retained in the receiving cavity. The conductive module comprises a plurality of conductive terminals. One of two ends of each of the conductive terminals is in the receiving cavity and adjacent to the assembling groove, and the other end of each of the conductive terminals extends out of the assembling groove from the receiving cavity.

In some embodiments, the conductive module comprises a terminal bases combined with the conductive terminals. The terminal base comprises a base portion and a tongue portion outward extending from a side surface of the base portion, the tongue portion is in the receiving cavity, and the terminal base abuts against the base component.

In some embodiments, the one end of each of the conductive terminals has a mating portion, the mating portions of the conductive terminals are arranged at two sides of the tongue portion, the other end of each of the conductive terminals has a soldering portion exposed from the adapter body, and each of the mating portions is substantially perpendicular to a corresponding one of the soldering portions.

In some embodiments, the terminal base has a plurality of grooves and a plurality of side arms at two sides of the base portion, the side arms are adjacent to the grooves, and an outer side of each of the side arms comprises a first positioning portion.

In some embodiments, the adapter body has a plurality of second positioning portions. The second positioning portions are at an inner side of the first side wall and an inner side of the second side wall and are adjacent to the assembling groove. Each of the first positioning portions is engaged with a corresponding one of the second positioning portions.

In some embodiments, the adapter body has a plurality of limiting recesses at the combining base wall, the limiting recesses are at two sides of the assembling groove, and each of the side arms is limited in a corresponding one of the limiting recesses.

In some embodiments, the base component comprises a main body and a first socket at one side of the main body, the base component comprises a sleeve member, and one of two ends of the sleeve member is adapted to be inserted into the first socket.

In some embodiments, the adapter body comprises a partition portion and a second socket in the receiving cavity, the second socket extends toward the second insertion opening from the partition portion, and the other end of the sleeve member is adapted to be inserted into the second socket.

In some embodiments, the adapter body has a plurality of inner protrusions at the inner side of the first side wall and the inner side of the second side wall, the main body of the base component is adapted to be placed in the receiving cavity through the first insertion opening of the adapter body, and the inner protrusions abut against two sides of the main body.

In some embodiments, the adapter body has a plurality of first engaging portions at the inner side of the first side wall and the inner side of the second side wall and adjacent to the inner protrusions, the base component comprises second engaging portions at two sides of the main body, and each of the first engaging portions is engaged with a corresponding one of the second engaging portions.

According to one or some embodiments of the instant disclosure, through the configuration that the conductive module is provided in the adapter body of the optical-fiber adapter, the optical-fiber adapter can transmit both optical signals and electric power.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates a perspective view of an optical-fiber adapter according to an exemplary embodiment of the instant disclosure;
Fig. 2 illustrates an exploded view of the optical-fiber adapter of the exemplary embodiment of the instant disclosure;
Fig. 3 illustrates an exploded sectional view of the optical-fiber adapter of the exemplary embodiment of the instant disclosure, where the optical-fiber adapter is not assembled yet;
Fig. 4 illustrates an assembled sectional view of the optical-fiber adapter of the exemplary embodiment of the instant disclosure;
Fig. 5 illustrates a front perspective view of the optical-fiber adapter of the exemplary embodiment of the instant disclosure;
Fig. 6 illustrates a back perspective view of the optical-fiber adapter of the exemplary embodiment of the instant disclosure;
Fig. 7 illustrates a side schematic view of the optical-fiber adapter of the exemplary embodiment of the instant disclosure;
Fig. 8 illustrates a perspective view of the optical-fiber adapter of the exemplary embodiment of the instant disclosure, where the optical-fiber adapter is to be mated with several optoelectronic connectors;
Fig. 9 illustrates a side sectional view of the optical-fiber adapter of the exemplary embodiment of the instant disclosure, where the optical-fiber adapter is to be mated with several optoelectronic connectors; and
Fig. 10 illustrates a side sectional view of the optical-fiber adapter of the exemplary embodiment of the instant disclosure, where the optical-fiber adapter is mated with several optoelectronic connectors.

### DETAILED DESCRIPTION

To enable persons having ordinary skills in the art to better understand and implement, the purposes, technical features, and advantages of the instant disclosure, the technical features and implementation methods of the instant disclosure are described in detail in the following paragraphs in conjunction with the accompanying drawings, and preferred embodiments are enumerated for further illustration. However, the following embodiments are not intended to limit the claim scope of the instant disclosure, and the drawings referenced in the following paragraphs are schematic representations related to the features of the instant disclosure.

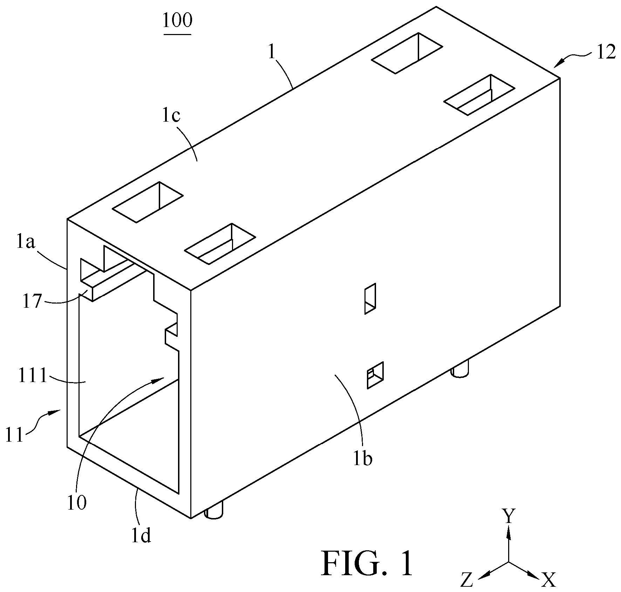

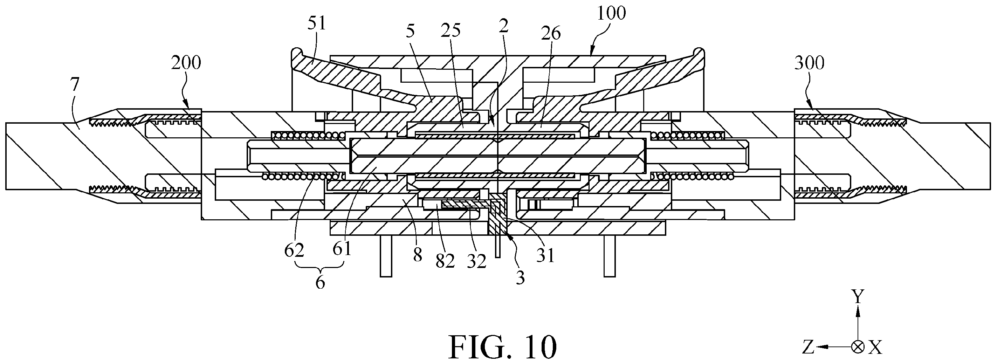

Please refer to Fig. 1. Fig. 1 illustrates a perspective view of an optical-fiber adapter 100. The optical-fiber adapter 100 is adapted to be utilized in a vehicle and to be inserted by optoelectronic connectors (as shown in Fig. 10), and the optical-fiber adapter 100 is provided for optical signal and electric power transmission. The optical-fiber adapter 100 is mounted on the vehicle; when the user wants to replace new optoelectronic connectors or a new adapter with the old ones, the user just needs to detach the optoelectronic connectors from the optical-fiber adapter 100, rather than cutting the transmission wires connected to the optoelectronic connectors.

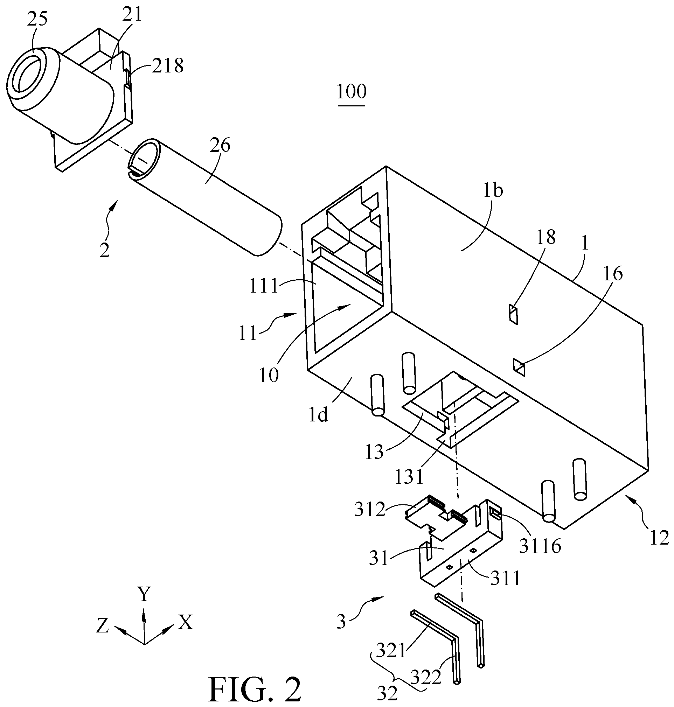

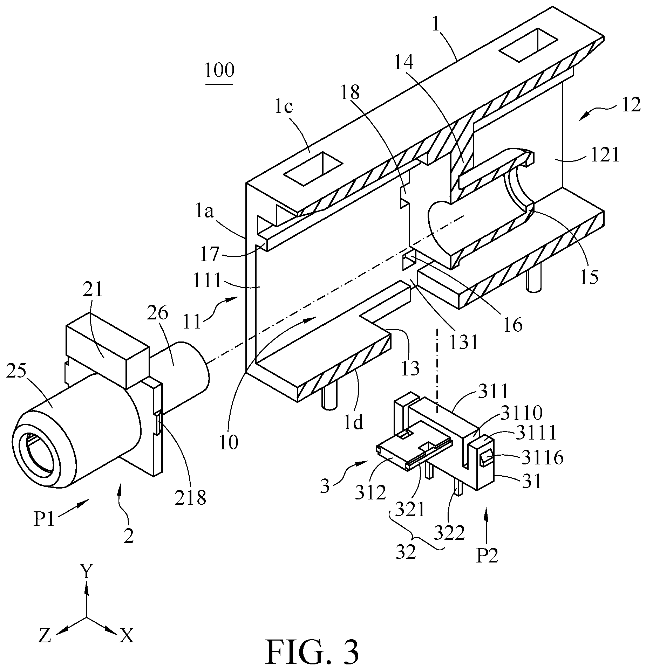

Please refer to Fig. 2 and Fig. 3. Fig. 2 illustrates an exploded view of the optical-fiber adapter 100. Fig. 3 illustrates an exploded sectional view of the optical-fiber adapter 100, where the optical-fiber adapter 100 is not assembled yet. The adapter body 1 is a hollow rectangular structure. Two ends of the adapter body 1 have a first mating end 11 and a second mating end 12. Four side walls of the adapter body 1 define a receiving cavity 10. The first mating side 11 of the adapter body 1 has a first insertion opening 111 in communication with the receiving cavity 10, and the second mating side 12 of the adapter body 1 has a second insertion opening 121 in communication with the receiving cavity 10. The first insertion opening 111 and the second insertion opening 121 of the adapter body 1 are respectively provided for being inserted by two optoelectronic connectors, so that the optical-fiber adapter 1 provides a configuration that two sides of the optical-fiber adapter 1 are being inserted by two optoelectronic connectors.

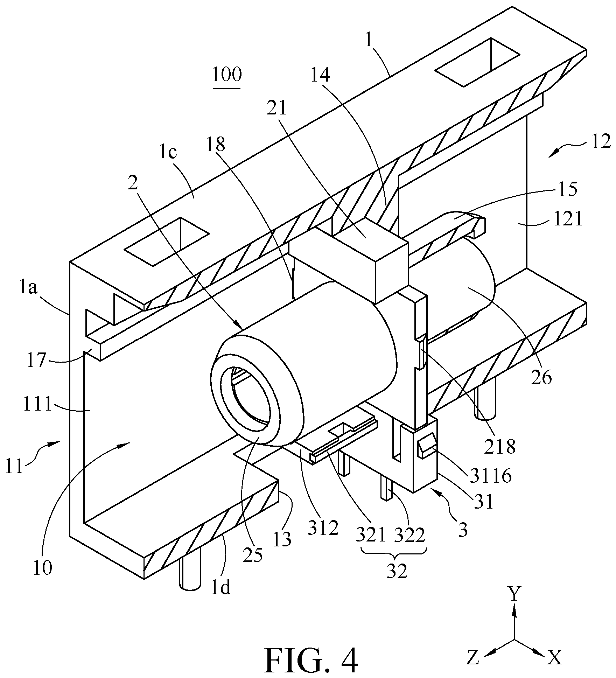

Please refer to Fig. 3 and Fig. 4. Fig. 4 illustrates an assembled sectional view of the optical-fiber adapter 100. The four side walls of the adapter body 1 are a first side wall 1a, a second side wall 1b, a blocking wall 1c, and a combining base wall 1d, respectively. The first side wall 1a and the second side wall 1b are arranged along the second axis (Y direction), and the blocking wall 1c and the combining base wall 1d are arranged along the first axis (X direction). The first side wall 1a and the second side wall 1b are respectively connected to two sides of the combining base wall 1d and two sides of the blocking wall 1c. The adapter body 1 has an assembling groove 13 at the combining base wall 1d and in communication with the receiving cavity 10. In some embodiments, the adapter body 1 has a plurality of second positioning portions 16, the second positioning portions 16 are at an inner side of the first side wall 1a and an inner side of the second side wall 1b, and the second positioning portions 16 are adjacent to the assembling groove 13. In this embodiment, the second positioning portion 16 is a positioning hole, but the instant disclosure is not limited thereto; in some other embodiments, the second positioning portion 16 may be a protruding block.

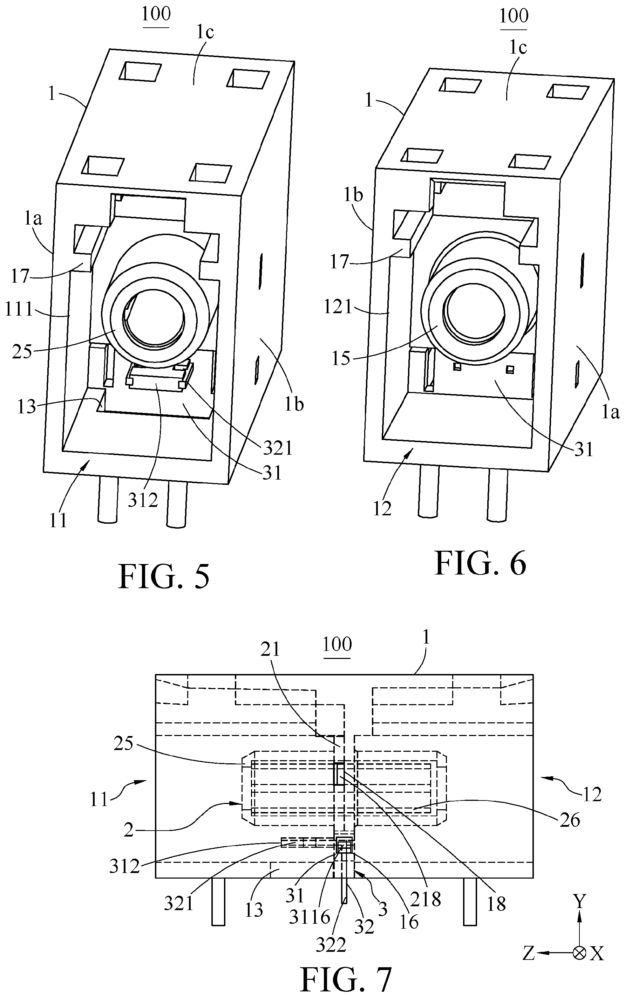

Please refer to Fig. 2 and Fig. 5 to Fig. 7. Fig. 5 illustrates a front perspective view of the optical-fiber adapter 100. Fig. 6 illustrates a back perspective view of the optical-fiber adapter 100. Fig. 7 illustrates a side schematic view of the optical-fiber adapter 100. The base component 2 comprises a main body 21 and a first socket 25 at one side of the main body 21. The base component 2 comprises a sleeve member 26 formed of ceramic. The sleeve member 26 is an elongated tube and has a cut groove extending longitudinally, and a cross-section of the sleeve member 26 is formed as a C-shape structure. One of two ends of the sleeve member 26 is adapted to be inserted into the first socket 25. When the base component 2 is assembled in the adapter body 1, the base component 2 is placed in the receiving cavity 10 through the first insertion opening 111, so that the base component 2 is approximately at a middle portion of the receiving cavity 10. When an optoelectronic connector is inserted into the optical-fiber adapter 100, the insertion pin 61 of the optoelectronic connector is inserted into the sleeve member 26 with the C-shaped structure, and the cut groove allows the sleeve member 26 to be expandable (as shown in Fig. 10).

Please refer to Fig. 2 and Fig. 5 to Fig. 7. The conductive module 3 comprises a plurality of conductive terminals 32. One of two ends of each of the conductive terminals 32 has a mating portion 321, the mating portions 321 are arranged at two sides of the tongue portion 312, and the other end of each of the conductive terminals 32 has a soldering portion 322 exposed from the adapter body 1. For each of the conductive terminals 32, the mating portion 321 is substantially perpendicular to the soldering portion 322. When the conductive module 3 is assembled in the adapter body 1, the one end of each of the conductive terminals 32 is placed into the receiving cavity 10 through the assembling groove 13, so that the one end of each of the conductive terminals 32 is positioned and adjacent to the assembling groove 13, and the other end of each of the conductive terminals 32 extends out of the assembling groove 13 from the receiving cavity 10.

Please refer to Fig. 3 and Fig. 5 to Fig. 7. In some embodiments, the adapter body 1 comprises a partition portion 14 and a second socket 15 in the receiving cavity 10; during the manufacturing process, the partition portion 14 and the second socket 15 are integrally formed with the adapter body 1. The partition portion 14 and the second socket 14 are in the receiving cavity 10, and the second socket 15 extends toward the second insertion opening 121 from the partition portion 14. When the base component 2 is assembled in the receiving cavity 10 from left to right along a first assembling direction P1 (the third axis (Z direction)) as shown in Fig. 3, the other end of the sleeve member 26 is adapted to be inserted into the second socket 15, so that the first socket 25 can be aligned with the second socket 15. The first assembling direction P1 is identical to the insertion direction for inserting the optoelectronic connector into the optical-fiber adapter 100.

Please refer to Fig. 3 and Fig. 5 to Fig. 7. In some embodiments, the conductive module 3 comprises a terminal base 31 combined with the conductive terminals 32. The terminal base 31 and the conductive terminals 32 are combined with each other during the injection molding process where the terminal base 31 and the conductive terminals 32 are formed with each other in the molding. The terminal base 31 comprises a base portion 311 and a tongue portion 312 outward extending from a side surface of the base portion 311. The base portion 311 is arranged along the second axis (Y direction), and the tongue portion 312 is arranged along the third axis (Z direction). Viewing from the second axis (Y direction), the tongue portion 312 and the base portion 311 are formed as a T-shaped structure. As shown in Fig. 3, viewing from the first axis (X direction), the tongue portion 312 and the base portion 311 are formed as a reverse L-shaped structure.

Please refer to Fig. 3 and Fig. 5 to Fig. 7. In some embodiments, the terminal base 31 has a plurality of grooves 3110 and a plurality of side arms 3111 at two sides of the base portion 311. The grooves 3110 are recessed from a top portion of the base portion 311 toward a bottom portion of the base portion 311 along the second axis (Y direction). The side arms 3111 are two outer sides of the base portion 311 and adjacent to the grooves 3110. An outer side of each of the side arms 3111 comprises a first positioning portion 3116. In this embodiment, the first positioning portion 3116 is a protruding block, but the instant disclosure is not limited thereto; in some other embodiments, the first positioning portion 3116 may be a positioning hole. When the terminal base 31 is assembled in the receiving cavity 10 from the assembling groove 13, the side arms 3111 are placed in the receiving cavity 10 along the inner surfaces of the first side wall 1a and the second side wall 1b. Next, the first positioning portions 3116 of the side arms 3111 press against the first side wall 1a and the second side wall 1b to drive the side arms 3111 to move, and the grooves 3110 provide the spaces for the side arms 3111 to be moved flexibly. When each of the first positioning portions 3116 is mated with a corresponding one of the second positioning portions 16, each of the first positioning portions 3116 is engaged with the corresponding one of the second positioning portions 16, so that the terminal base 31 is limited in the receiving cavity 10.

Please refer to Fig. 3 and Fig. 5 to Fig. 7. When the terminal base 31 of the conductive module 3 is assembled in the receiving cavity 10 from the assembling groove 13 at the combining base wall 1d, because the size of the opening of the assembling groove 13 is greater than the sizes of the tongue portion 312 and the base portion 311, the tongue portion 312 and the base portion 311 can be placed in receiving cavity 10 conveniently, from bottom to top along a second assembling direction P2 (the second axis (Y direction)) as shown in Fig. 3, thereby preventing the tongue portion 312 and the base portion 311 from impacting the edge around the opening of the assembling groove 13 and thus get stuck. Next, when the tongue portion 312 is assembled in the receiving cavity 10, the terminal base 31 abuts against a bottom portion of the base component 2.

Please refer to Fig. 2 and Fig. 5 to Fig. 7. In some embodiments, the adapter body 1 has a plurality of limiting recesses 131 at the combining base wall 1d, and the limiting recesses 131 are at two sides of the assembling groove 13. Viewing from the second axis (Y direction), the assembling groove 13 and the limiting recesses 131 are formed as a T-shaped structure. When the terminal base 31 is assembled in the receiving cavity 10 from the assembling groove 13 at the combining base wall 1d, the two sides of the base portion 311 of the terminal base 31 are limited in the limiting recesses 131, thereby preventing the tongue portion 312 from impacting the edge around the opening of the assembling groove 13. Moreover, when the terminal base 31 is assembled in the receiving cavity 10, each of the side arms 3111 is limited in a corresponding one of the limiting recesses 131.

Please refer to Fig. 2 and Fig. 5 to Fig. 7. In some embodiments, the adapter body 1 has a plurality of inner protrusions 17 configured as an elongated blocks and arranged along the third axis (Z direction). The inner protrusions 17 are at the inner side of the first side all 1a and the inner side of the second side wall 1b, and the inner protrusions 17 are opposite to each other. When the base component 2 is assembled in the receiving cavity 10, the main body 21 of the base component 2 is adapted to be aimed at and assembled into the receiving cavity 10 from the first insertion opening 111 of the adapter body 11. Next, the inner protrusions 17 abut against two sides of the main body 21, so that the base component 2 can be stably positioned within the receiving cavity 10.

Please refer to Fig. 3 and Fig. 5 to Fig. 7. In some embodiments, the adapter body 1 has a plurality of first engaging portions 18. In this embodiment, the first engaging portion 18 is an engaging hole, but the instant disclosure is not limited thereto; in some other embodiments, the first engaging portion 18 may be a protruding block. The first engaging portions 18 are at the inner side of the first side wall 1a and the inner side of the second side wall 1b and adjacent to the inner protrusions 17. The base component 2 comprises second engaging portions 218 at two sides of the main body 21. In this embodiment, the second engaging portion 218 is a protruding block, but the instant disclosure is not limited thereto; in some other embodiments, the second engaging portion 218 may be an engaging hole. When the base component 2 is assembled in the receiving cavity 10, each of the second engaging portions 218 is engaged with a corresponding one of the first engaging portions 18.

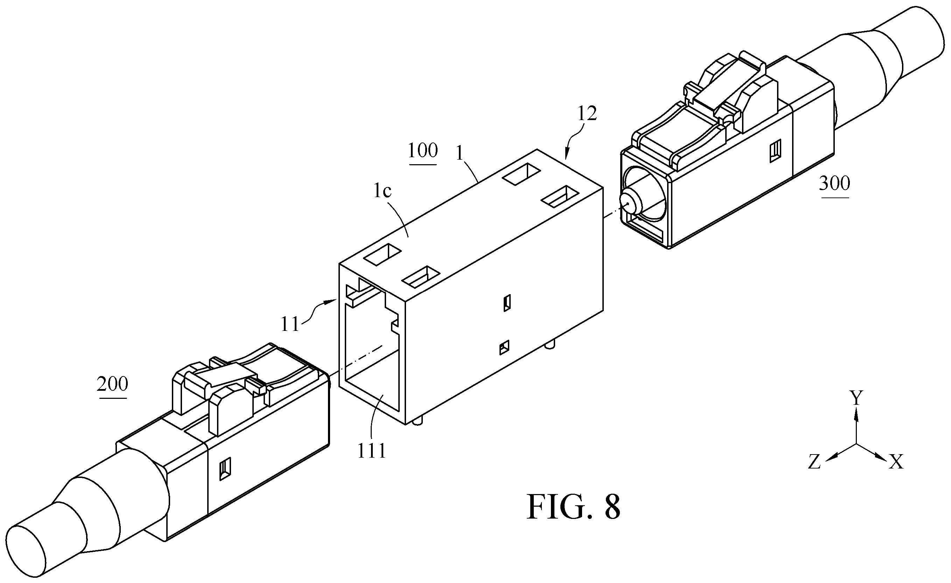

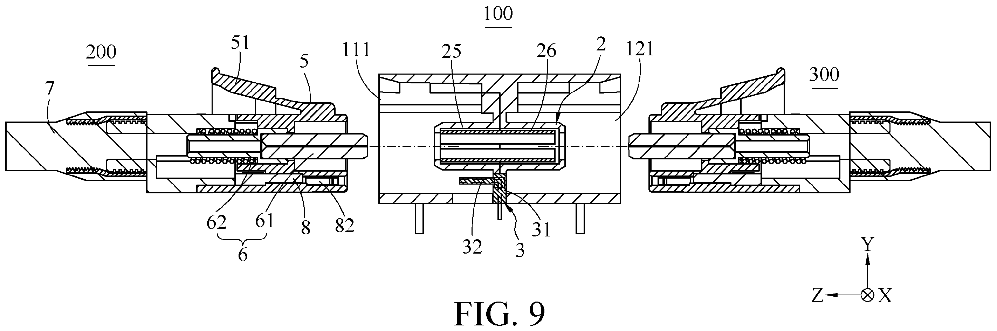

Please refer to Fig. 3 and Fig. 8 to Fig. 10. Fig. 8 illustrates a perspective view of the optical-fiber adapter 100, where the optical-fiber adapter 100 is to be mated with several optoelectronic connectors. Fig. 9 illustrates a side sectional view of the optical-fiber adapter 100, where the optical-fiber adapter 100 is to be mated with several optoelectronic connectors. Fig. 10 illustrates a side sectional view of the optical-fiber adapter 100, where the optical-fiber adapter 100 is mated with several optoelectronic connectors. The first insertion opening 111 and the second insertion opening 121 of the adapter body 1 of the optical-fiber adapter 100 are respectively adapted to be inserted by a first optoelectronic connector 200 and a second optoelectronic connector 300. The first optoelectronic connector 200 and the second optoelectronic connector 300 have identical structures. Each of the first optoelectronic connector 200 and the second optoelectronic connector 300 comprises a coupling member 5 and a flexible arm 51 on the coupling member 5. A core component 6 is in the coupling member 5, and the core component 6 comprises an insertion pin 61 and a spring 62 fitted over the insertion pin 61. The insertion pin 61 of the core component 6 is exposed from one of two ends of the coupling member 5, a tail cap 7 is fitted over the other end of the coupling member 5, and the tail cap 7 may be fitted over a transmission wire. Each of the first optoelectronic connector 200 and the second optoelectronic connector 300 comprises an electrical connection module 8 at a bottom portion of the coupling member 5, and the electrical connection module 8 has a plurality of electrical connection terminals 82.

Please refer to Fig. 3 and Fig. 8 to Fig. 10. When the first optoelectronic connector 200 and the second optoelectronic connector 300 are respectively inserted into the first insertion opening 111 and the second insertion opening 121, the electrical connection module 8 of the first optoelectronic connector 200 or the second optoelectronic connector 300 contacts the conductive module 3 of the optical-fiber adapter 100, thereby achieving the electric power transmission. Moreover, the insertion pins 61 of the core components 6 of the first optoelectronic connector 200 and the second optoelectronic connector 300 are mated with the base component 2, thereby achieving the optical signal transmission. According to one or some embodiments of the instant disclosure, through the combined optoelectronic transmission, after the optoelectronic connector is mated with the optical-fiber adapter 100, the signal can be transmitted stably, thereby meeting the requirements of complex automotive environments and satisfying waterproofing, vibration resistance, corrosion resistance, and high temperature/high humidity testing standards.

## Claims

1. An optical-fiber adapter (100) comprising:
an adapter body (1), wherein two ends of the adapter body (1) have a first mating side (11) and a second mating side (12); four side walls of the adapter body (1) define a receiving cavity (10), the first mating side (11) of the adapter body (1) has a first insertion opening (111) in communication with the receiving cavity (10), and the second mating side (12) of the adapter body (1) has a second insertion opening (121) in communication with the receiving cavity (10); the four side walls of the adapter body (1) are a first side wall (1a), a second side wall (1b), a blocking wall (1c), and a combining base wall (1d), respectively; the first side wall (1a) and the second side wall (1b) of the adapter body (1) are respectively connected to two sides of the combining base wall (1d) and two sides of the blocking wall (1c); the adapter body (1) has an assembling groove (13) at the combining base wall (1d) and in communication with the receiving cavity (10);
a base component (2) retained in the receiving cavity (10); and
a conductive module (3) comprising a plurality of conductive terminals (32), wherein one of two ends of each of the conductive terminals (32) is in the receiving cavity (10) and adjacent to the assembling groove (13), and the other end of each of the conductive terminals (32) extends out of the assembling groove (13) from the receiving cavity (10).

2. The optical-fiber adapter (100) according to claim 1, wherein the conductive module (3) comprises a terminal base (31) combined with the conductive terminals (32), the terminal base (31) comprises a base portion (311) and a tongue portion (312) outward extending from a side surface of the base portion (311), the tongue portion (312) is in the receiving cavity (10), and the terminal base (31) abuts against the base component (2).

3. The optical-fiber adapter (100) according to claim 2, wherein the one end of each of the conductive terminals (32) has a mating portion (321), the mating portions (321) of the conductive terminals (32) are arranged at two sides of the tongue portion (312), the other end of each of the conductive terminals (32) has a soldering portion (322) exposed from the adapter body (1), and each of the mating portions (321) is substantially perpendicular to a corresponding one of the soldering portions (322).

4. The optical-fiber adapter (100) according to claim 2, wherein the terminal base (31) has a plurality of grooves (3110) and a plurality of side arms (3111) at two sides of the base portion (311), the side arms (3111) are adjacent to the grooves (3110), and an outer side of each of the side arms (3111) comprises a first positioning portion (3116).

5. The optical-fiber adapter (100) according to claim 4, wherein the adapter body (1) has a plurality of second positioning portions (16), the second positioning portions (16) are at an inner side of the first side wall (1a) and an inner side of the second side wall (1b) and are adjacent to the assembling groove (13), and each of the first positioning portions (3116) is engaged with a corresponding one of the second positioning portions (16).

6. The optical-fiber adapter (100) according to claim 4, wherein the adapter body (1) has a plurality of limiting recesses (131) at the combining base wall (1d), the limiting recesses (131) are at two sides of the assembling groove (13), and each of the side arms (3111) is limited in a corresponding one of the limiting recesses (131).

7. The optical-fiber adapter (100) according to claim 1, wherein the base component (2) comprises a main body (21) and a first socket (25) at one side of the main body (21), the base component (2) comprises a sleeve member (26), and one of two ends of the sleeve member (26) is adapted to be inserted into the first socket (25).

8. The optical-fiber adapter (100) according to claim 7, wherein the adapter body (1) comprises a partition portion (14) and a second socket (15) in the receiving cavity (10), the second socket (15) extends toward the second insertion opening (121) from the partition portion (14), and the other end of the sleeve member (26) is adapted to be inserted into the second socket (15).

9. The optical-fiber adapter (100) according to claim 7, wherein the adapter body (1) has a plurality of inner protrusions (17) at an inner side of the first side wall (1a) and an inner side of the second side wall (1b), the main body (21) of the base component (2) is adapted to be placed in the receiving cavity (10) through the first insertion opening (111) of the adapter body (1), and the inner protrusions (17) abut against two sides of the main body (21).

10. The optical-fiber adapter (100) according to claim 9, wherein the adapter body (1) has a plurality of first engaging portions (18) at the inner side of the first side wall (1a) and the inner side of the second side wall (1b) and adjacent to the inner protrusions (17), the base component (2) comprises second engaging portions (218) at two sides of the main body (21), and each of the first engaging portions (18) is engaged with a corresponding one of the second engaging portions (218).
